# FASCICULE DE BREVET EUROPEEN

(11) **EP 3 057 528 B1**
(45) Date de publication et mention de la délivrance du brevet: **27.02.2019**
(21) Numéro de dépôt: 14824047.6
(22) Date de dépôt: 10.10.2014
(51) Int. Cl.: A61C 3/025, A61C 17/02, B24C 5/04, B05B 1/26, B24C 1/00

(54) **BUSE DE POLISSAGE DENTAIRE**
POLIERDÜSE
POLISHING NOZZLE

(30) Priorité: 15.10.2013 FR 1360030
(43) Date de publication de la demande: 24.08.2016
(73) Titulaire: SOCIETE POUR LA CONCEPTION DES APPLICATIONS DES TECHNIQUES ELECTRONIQUES, 33700 Merignac (FR)
(72) Inventeur: CASABONNE, Thierry, 33200 Bordeaux (FR); RUELLAN, Vianney, 33200 Bordeaux (FR); SAXER, Ulrich, 8127 Forch (CH)
(74) Mandataire: Desormiere, Pierre-Louis
(86) Numéro de dépôt international: PCT/FR2014/052585
(87) Numéro de publication internationale: WO 2015/055923

(56) Documents cités:
- US-A- 2 439 032
- US-A- 3 424 386
- US-A- 3 612 405
- US-A- 4 663 893
- US-A1- 2007 042 316
- US-A1- 2008 319 453
- US-A1- 2012 118 992
- US-B1- 6 325 624

## Description

### Arrière-plan de l'invention

La présente invention concerne le domaine des polisseurs destinés à délivrer à la fois un fluide (tel que de l'eau) et un mélange d'air et de poudre, et concerne plus particulièrement une buse de polissage (ou buse pour polisseur).

L'invention porte en particulier sur une buse pour polisseur destinée aux traitements dentaires.

Typiquement, un polisseur comprend principalement une pièce à main reliée, d'une part, à une turbine d'alimentation en air sous pression permettant d'entraîner une poudre de traitement et, d'autre part, à une pompe d'alimentation en fluide, la pièce à main étant en outre munie d'une buse de sortie pour délivrer le fluide et un mélange d'air et de poudre.

L'invention concerne plus particulièrement, mais non exclusivement, les polisseurs utilisés pour les traitements dans le domaine dentaire, notamment pour le traitement des poches parodontales, par délivrance d'un fluide et/ou d'un mélange air/poudre entre la gencive et la dent au niveau de la ou des poches parodontales. Dans cette application particulière, la poudre utilisée est une poudre dentaire adaptée au nettoyage et au traitement des dents.

Les polisseurs actuellement disponibles qui permettent de délivrer à la fois un fluide comme de l'eau et un mélange d'air et de poudre dentaire sont équipés d'une buse de sortie qui comprend deux conduits distincts, l'un pour délivrer le fluide et l'autre pour délivrer le mélange air/poudre. Une telle buse est notamment décrite dans le document US 2007/042316.

Le document FR2962323 décrit également une buse pour polisseur comprenant un premier et un deuxième canal interne, ceux-ci étant destinés à délivrer respectivement un mélange air/poudre et un fluide. Cette buse permet avantageusement de délivrer un flux (ou « spray ») directement en sortie de buse, ce flux étant formé par la réunion du fluide et du mélange air/poudre. La délivrance d'un tel flux est rendu possible par le ménagement d'une chambre au voisinage de l'extrémité libre de la partie distale de la buse, les premier et deuxième canaux internes débouchant dans ladite chambre de sorte que le fluide et le mélange air/poudre se réunissent dans la chambre puis se dispersent ensemble à l'extérieur de la buse via deux ouvertures latérales prévues à cet effet.

La buse décrite dans le document FR2962323 offre des résultats satisfaisants grâce notamment au fait que le flux comprenant à la fois le fluide et le mélange air/poudre est dispersé efficacement au travers des ouvertures latérales dans la zone à traiter (e.g. une poche parodontale).

Toutefois, il est souhaitable d'améliorer encore davantage l'effet de dispersion du flux sortant de la buse afin d'optimiser l'efficacité du traitement dans la zone concernée.

Par ailleurs, la poudre dentaire est en général soluble dans l'eau. La déposante a observé que, si la poudre se mélange trop longtemps avec de l'eau dans la chambre située au voisinage de l'extrémité de la buse, il y a un risque que la poudre se dissolve de manière importante et forme un mélange visqueux susceptible dans certains cas d'obstruer au moins partiellement les ouvertures par lesquelles doit être délivré le flux (ou spray). Ce risque de colmatage dépend notamment de la granulométrie de la poudre utilisée.

Il existe donc aujourd'hui un besoin important pour une buse pour polisseur offrant des performances accrues vis-à-vis des modèles antérieures et permettant notamment de palier les problèmes identifiés ci-dessus.

### Objet et résumé de l'invention

A cet effet, la présente invention concerne une buse pour polisseur destinée aux traitements dentaires, cette buse comprenant un corps s'étendant entre une partie proximale destinée à être raccordée à une pièce à main et une partie distale, le corps comprenant un premier canal destiné à délivrer une poudre de polissage et un deuxième canal destiné à délivrer un fluide,
les deux canaux débouchant chacun sur au moins un orifice respectif débouchant (ou disposé) au voisinage de l'extrémité libre de la partie distale,
dans laquelle au moins une portion de l'extrémité libre de la partie distale forme une languette s'étendant dans le prolongement de ladite partie distale en aval des orifices, la languette étant disposée à distance (ou espacés) des orifices de façon à perturber au moins en partie le flux formé par la réunion de la poudre de polissage et du fluide sortant desdits orifices.

En perturbant le passage du flux sortant (i.e. le flux formé par la réunion de la poudre de polissage et du fluide), la languette entraîne la dispersion dudit flux sortant dans la zone à traiter. Cette dispersion est avantageuse en ce que le champ de dispersion est très large et permet de couvrir de façon optimale la zone à traiter. La réunion des flux de poudre de polissage et de fluide est réalisée en amont de la languette (i.e. dans l'espace séparant la languette des orifices), de sorte que la projection de la poudre et du fluide est réalisée de manière homogène dans de multiples directions.

De plus, la buse selon un mode de réalisation particulier de l'invention est dépourvue d'une chambre destinée à recevoir la poudre et le fluide comme par exemple dans la buse du document FR2962323. Selon ce mode de réalisation, les orifices des premier et deuxième canaux débouchent directement sur l'extérieur de la buse, au voisinage de la partie distale de la buse. Dans ce mode de réalisation particulier, le mélange du fluide avec la poudre se fait directement à la sortie des orifices dans l'espace extérieur séparant lesdits orifices de la languette. On s'affranchit ainsi de tous potentiels risques de colmatage comme précédemment expliqué dans la mesure où le fluide et la poudre de polissage se mélange uniquement à l'extérieur de la buse.

De plus, étant donné son positionnement à l'extrémité libre de la partie distale, la languette présente l'avantage en ce qu'elle peut faciliter l'insertion par le praticien de l'extrémité de la buse dans la zone à traiter. La languette de l'invention peut faciliter notamment l'introduction de la buse dans une poche parodontale.

Dans un mode de réalisation particulier, la languette est sensiblement parallèle au flux sortant.

Dans un mode de réalisation particulier, la languette s'étend dans un plan axial de la partie distale.

Le plan axial dans lequel s'étend la languette peut former un angle déterminé non nul α avec le plan axial horizontal de la partie distale de la buse (ce plan axial horizontal étant lui-même perpendiculaire au plan axial vertical de la partie proximale de la buse). Cet angle α déterminé est par exemple compris entre 13° et 17° et est de préférence de 15° (ou sensiblement égal à 15°). Fixer ainsi l'angle α permet avantageusement de faciliter l'accès à certaines dents du patient telles que les molaires par exemple sans qu'il soit nécessaire pour le praticien de tourner excessivement la main. L'ergonomie de la buse et du polisseur en est ainsi améliorée.

En variante, cet angle α est nul. La languette s'étend alors dans le plan axial horizontal de la partie distale de la buse.

Dans un mode de réalisation particulier, les orifices sont orientés de façon à diriger au moins en partie le flux sortant vers un bord de la languette. Dans un mode particulier, le flux sortant est au moins en partie dirigé vers le bord proximal de la languette. Cette orientation préférentielle permet d'optimiser l'effet de dispersion résultant de la perturbation du flux sortant par la languette.

Dans un mode de réalisation particulier, la languette est configurée de sorte que ledit flux sortant se disperse de part et d'autre de ladite languette. La dispersion est ainsi optimale.

Dans un mode de réalisation particulier, le premier canal débouche sur un premier orifice central et le deuxième canal débouche sur deux deuxièmes orifices situés de part et d'autre du premier orifice.

Dans ce mode particulier, les deuxièmes orifices peuvent être configurés pour faire converger le fluide sortant vers la poudre de polissage sortant du premier orifice. En d'autres termes, les deuxièmes orifices peuvent être configurés pour que les flux respectifs de fluide sortant de ces deuxièmes orifices convergent vers le flux de poudre (ou de mélange air/poudre) sortant du premier orifice.

Toujours dans ce mode particulier, les deuxièmes orifices peuvent être en forme de fente et le premier orifice peut être de forme sensiblement circulaire.

La forme circulaire du premier orifice permet d'obtenir un flux sortant fluide/poudre particulièrement homogène tandis que les deuxièmes orifices en forme de fente permettent de délivrer le fluide de façon à ce que celui-ci canalise le flux de poudre en enveloppant le flux de poudre au moins partiellement afin d'améliorer l'effet de dispersion sur la languette.

Dans un mode de réalisation particulier, chaque orifice du premier canal et du deuxième canal débouche sur l'extérieur de la buse au voisinage de l'extrémité libre de ladite partie distale de la buse, de sorte que ladite réunion de la poudre de polissage dentaire et du fluide sortant des orifices soit réalisée à l'extérieur de la buse.

Dans un mode de réalisation particulier, la languette présentant une forme effilée pour faciliter l'introduction de ladite buse dans une zone à traiter.

Dans un mode de réalisation particulier, la buse comprend en outre au voisinage de l'extrémité libre de la partie distale un mécanisme de fixation configuré pour fixer en position de travail la languette, le mécanisme de fixation autorisant le détachement de ladite languette en vue de son remplacement éventuel.

Dans un mode de réalisation particulier, le flux sortant résultant de la réunion de la poudre de polissage et du fluide est sensiblement parallèle à l'axe longitudinal de la partie distale de la buse.

Dans un mode de réalisation particulier, le fluide est un liquide, tel que de l'eau par exemple.

La présente invention concerne en outre un polisseur comprenant une pièce à main comportant un premier canal d'alimentation en poudre de polissage et un deuxième canal d'alimentation en fluide, ce polisseur comprenant en outre une buse telle que définie ci-avant, la partie proximale de la buse étant connectée à la pièce à main, le premier canal d'alimentation coopérant avec le premier canal de la buse et le deuxième canal d'alimentation coopérant avec le deuxième canal de la buse.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective générale d'une buse pour polisseur conforme à un mode de réalisation particulier, ainsi que d'une partie d'une pièce à main connectée à la buse ;
- la figure 2 est une vue en perspective en coupe suivant II de la buse et de la partie de pièce à main de la figure 1 ;
- la figure 3 est une vue de dessus de la buse figure 1 ;
- la figure 4 est une vue latérale de la buse de la figure 1 ;
- la figure 5 est une vue de détail en perspective et en coupe suivant V de la figure 2 de l'extrémité libre de la partie distale de la buse de la figure 1 ;
- la figure 6 est une vue en perspective de la partie distale de la buse de la figure 1 ;
- la figure 7 est une vue de détail de dessus de l'extrémité libre de la partie distale de la buse de la figure 1 ; et
- la figure 8 est une vue avant de la buse de la figure 1.

### Description détaillée de plusieurs modes de réalisation

La présente invention concerne le domaine des polisseurs destinés à délivrer à la fois un fluide (tel que de l'eau) et un mélange d'air et de poudre, et concerne plus particulièrement une buse de polissage.

Dans la partie du document qui suit, sont décrits des exemples de mise en oeuvre de l'invention relatifs à un polisseur dans le domaine dentaire, et plus particulièrement, un polisseur adapté aux traitements dentaires comme le traitement des poches parodontales par exemple. On comprendra toutefois que l'invention concerne plus généralement une buse pour polisseur apte à délivrer un flux comprenant un fluide et de la poudre (e.g. poudre dentaire ou poudre de polissage) dans une zone à traiter.

Par ailleurs, on considère ici des exemples de réalisation où le fluide délivré par la buse est un fluide préférentiellement liquide, tel que de l'eau par exemple. A noter toutefois que tous autres fluides adaptés au transport et à la canalisation d'une poudre peuvent être utilisés dans le cadre de l'invention. Alternativement à l'eau, de l'air ou un quelconque gaz ou mélange gazeux peut ainsi être utilisé en tant que fluide dans la buse de l'invention.

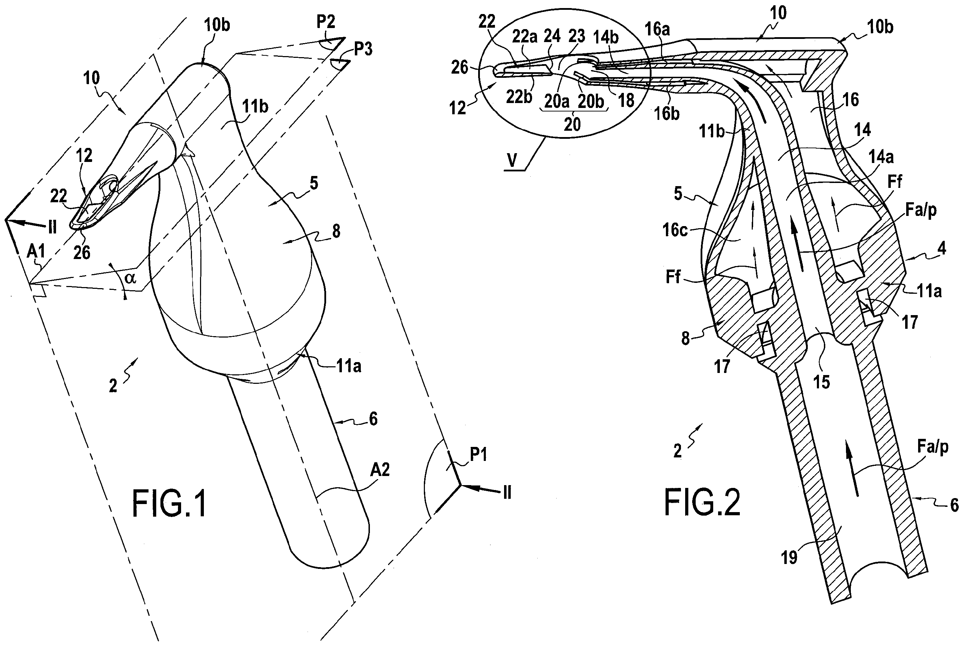

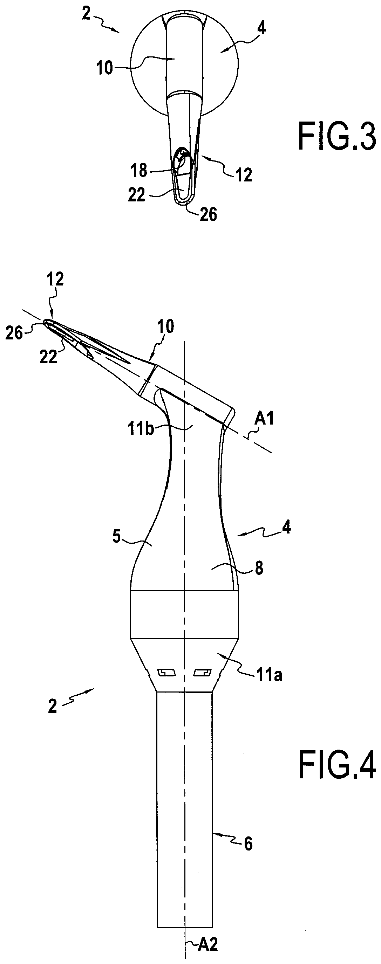

Les **figures 1 à 8** représentent un polisseur 2 et une buse 4 pour polisseur, ceux-ci étant conformes à un mode de réalisation particulier de l'invention.

La buse 4 est formée d'un corps 5 qui s'étend entre une partie proximale 8 destinée à être couplée mécaniquement avec une pièce à main 6 d'alimentation en mélange air/poudre et en fluide comme expliqué ci-après et une partie distale 10 à l'extrémité de laquelle sont délivrés le mélange air/poudre et le fluide. En ce qui concerne le mélange air/poudre, d'autre gaz (ou mélanges gazeux) que l'air peuvent être utilisés.

La partie proximale 8 comporte une extrémité libre 11a comportant ici un connecteur muni d'un joint afin de permettre une connexion étanche entre la pièce à main 6 (dont seule l'extrémité distale est représentée sur les figures) et la buse 4. L'extrémité opposée 11b de la partie proximale 8 est prolongée par la partie distale 10 de la buse 4.

Dans cet exemple, la jonction entre la partie proximale 8 et la partie distale 10 forme un coude destiné à faciliter l'orientation de la buse par le praticien lorsque celui-ci manipule la pièce à main 6.

La buse 4 comprend un premier canal interne 14 et un deuxième canal interne 16 qui s'étendent chacun à l'intérieur du corps 5 depuis l'extrémité libre 11a de la partie proximale 8 jusqu'à l'extrémité libre 12 de la partie distale 10 (**figure 2**).

Plus précisément, dans l'exemple envisagé ici, le premier canal interne 14 est ménagé au centre des parties proximale et distale 8, 10. Ce premier canal 14 débouche en entrée de buse sur un orifice d'entrée 15 apte à recevoir un flux Fa/p de mélange d'air et de poudre délivré par la pièce à main 6. Le premier canal 14 débouche par ailleurs en sortie de buse sur un orifice de sortie 18, lui-même débouchant (ou disposé) au voisinage de l'extrémité libre 12 de la partie distale 10.

Le deuxième canal interne 16 débouche en entrée de la buse 4 sur un orifice d'entrée 17 et en sortie de buse sur deux orifices de sorties 20a et 20b, notés collectivement 20 (**figure 2**), ces orifices de sortie 20 débouchant eux-mêmes (ou disposés) au voisinage de l'extrémité libre 12 de la partie distale 10. Ce deuxième canal interne 16 est destiné à recevoir un flux Ff de fluide provenant de la pièce à main 6.

A noter que le nombre et le positionnement des orifices respectifs de sortie pour chacun des deux canaux internes 14 et 16 peuvent être adaptés selon les besoin. On peut notamment envisager de ne ménager qu'un seul orifice de sortie 20 du deuxième canal interne 16 bien que l'agencement de deux orifices 20 comme ici décrit soit préféré.

Chacun des deux canaux internes doit déboucher sur au moins un orifice de sortie respectif au voisinage de l'extrémité libre de la partie distale de la buse.

Dans l'exemple des figures, le deuxième canal interne 16 présente une première portion annulaire 16c formant, à partir de l'extrémité libre 11a de la partie proximale 8, un conduit s'étendant autour d'une première portion 14a du premier canal interne 14 dans la partie proximale 8. Dans cet exemple, la première portion annulaire 16c présente tout d'abord une forme cylindrique puis une forme tronconique.

Toujours dans cet exemple, au niveau de la fin de cette première portion annulaire 16c, le deuxième canal 16 se divise en deux conduits internes 16a et 16b traversant la partie distale 10 de la buse pour déboucher respectivement sur les orifices de sortie 20a et 20b. L'homme du métier pourra toutefois envisager d'autres aménagements des canaux internes de buse dans le cadre de l'invention.

Dans cet exemple, les conduits internes 16a et 16b forment collectivement la partie distale du deuxième canal interne 16 débouchant dans le voisinage de l'extrémité libre 12 de la partie distale 10.

Dans le cas envisagé ici, les deux conduits internes 16a et 16b s'étendent le long et parallèlement à la portion distale 14b du premier canal interne 14, cette portion 14b s'étendant elle-même le long de la partie distale 10 pour déboucher sur l'orifice de sortie 18. Dans cet exemple, les deux conduits internes 16a et 16b sont disposés de part et d'autre vis-à-vis de la portion distale 14b du premier canal interne 14.

La buse 4 est ici montée sur la pièce à main 6 dont seule une partie de l'extrémité distale est représentée sur les figures. La pièce à main 6 est par exemple connectée avec un réservoir interchangeable (non représenté) contenant de la poudre dentaire. La pièce à main 6 peut également être raccordée à un compresseur (non représenté) destiné à envoyer un flux sous pression dans la pièce à main. Enfin, une pompe peut être connectée à la pièce à main 6 afin d'alimenter cette dernière en fluide, préférentiellement un fluide liquide.

Le premier canal interne 14 de la buse coopère au niveau de l'extrémité distale 11a avec un conduit interne 19 de la pièce à main 6 délivrant le flux Fa/p de mélange air/poudre. De même, le second canal interne 16 de la buse coopère au niveau de l'extrémité distale 11a avec un conduit interne (non représenté) de la pièce à main 6 délivrant le flux Ff de fluide.

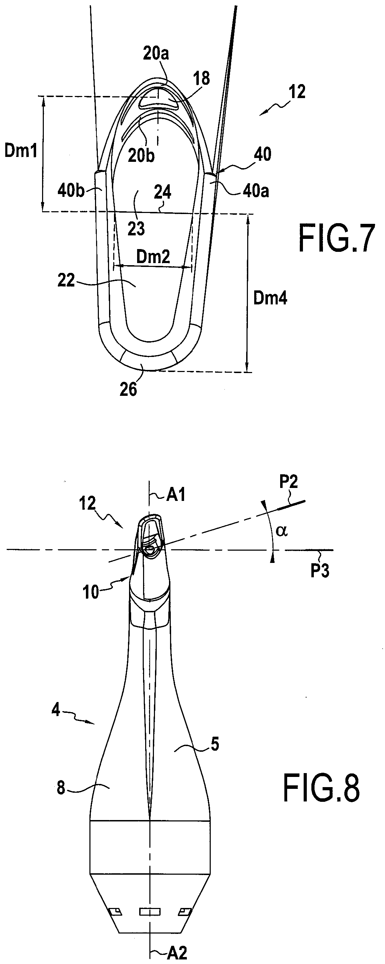

Conformément à la présente invention, au moins une portion de l'extrémité libre 12 de la partie distale 10 de la buse 4 forme une languette (ou « spatule », ou encore « palette ») 22 s'étendant dans le prolongement de la partie distale 10 en aval des orifices de sortie 18 et 20 (**figure 7**).

Comme représenté sur les **figures 1 à 8**, la languette 22 est ici montée à l'extrémité libre 12 de la partie distale 10, cette languette étant fixée solidairement au reste de la buse. Dans cet exemple, la fixation de la languette est assurée au moyen d'un mécanisme de fixation 40 comprenant deux bras 40a et 40b.

Dans cet exemple, la languette 22 s'étend dans un plan axial P2 de la partie distale 10, ce plan P2 formant un angle prédéterminé α autour de l'axe longitudinal A1 de la partie distale par rapport au plan axial horizontal P3 de la partie distale 10 (**figure 1**). Cet angle α sera décrit plus en détail ultérieurement. Le plan axial horizontal P3 représenté en figure 1 est perpendiculaire au plan axial vertical P1 de la partie proximale 8.

La languette 22 comporte deux faces libres 22a et 22b opposées l'une de l'autre. Ces faces supérieure et inférieure 22a, 22b peuvent rentrer directement en contact avec la bouche du patient, dans le cas du traitement d'un poche parodontale par exemple.

Conformément à la présente invention, la languette 22 est en outre disposée à distance (ou espacés) des orifices de sortie 18 et 20 de façon à perturber au moins en partie le flux de sortie (ou spray) Fs formé par la réunion de la poudre de polissage et du fluide sortant des orifices de sortie 18 et 20. Cette réunion entraîne le mélange de la poudre et du fluide. Pour ce faire, les orifices de sortie de poudre et de fluide sont de préférence relativement proches les uns des autres.

Le flux Fs délivré en sortie de buse prend par exemple la forme d'un spray ou jet sous pression comprenant le fluide et la poudre.

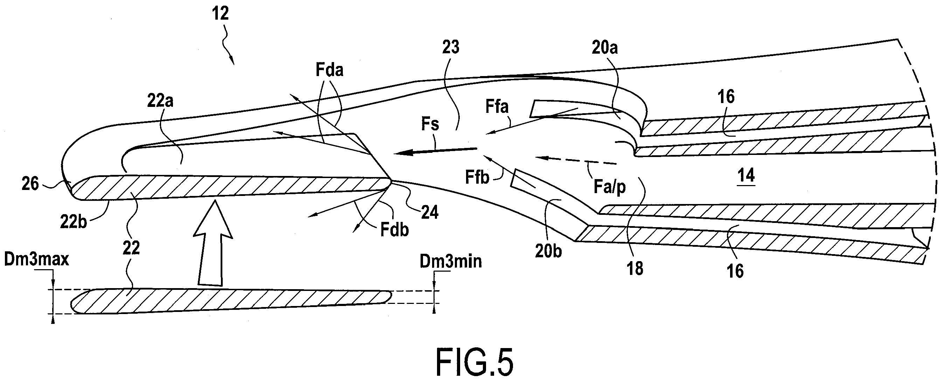

La languette 22 est ici disposée sur le passage du flux de sortie Fs délivré par la buse, ce flux Fs étant formé par la réunion du flux Fa/p d'air et de poudre sortant de l'orifice 18, d'une part, et des flux de fluide Ffa, Ffb (notés collectivement Ff) sortant respectivement des orifices de sortie 20a et 20b, d'autre part (**figure 5**). La languette 22 ne bloque pas totalement le passage du flux de sortie Fs mais perturbe son passage au voisinage de l'extrémité libre 12 de la partie distale 10. La languette 22 a plus particulièrement pour fonction de disperser le flux Fs délivré en sortie de buse.

Dans cet exemple de réalisation, la languette 22 est disposée parallèlement (ou sensiblement parallèlement) à la direction du flux sortant Fs.

Toujours dans cet exemple, une ouverture 23 traversant de part en part la buse 4 au voisinage de son extrémité libre 12 est ménagée afin de former un espace libre entre les orifices de sortie d'une part, et la languette 22 d'autre part (**figure 7**). On ménage ainsi un écart Dm1 entre les orifices de sortie d'une part, et la languette 22 (plus précisément avec le bord proximal 24 de la languette 22 faisant face aux orifices de sortie 18 et 20) d'autre part. Dans le cas présent, l'écart Dm1 est défini ente l'orifice 18 et le point le plus proche du bord proximal 24 de la languette 22.

Cet écart Dm1 est choisi de sorte que les flux Ff et Fa/p se rejoignent au moins partiellement avant d'atteindre le bord proximal 24 de la languette 22, la réunion des flux Ff et Fa/p formant ainsi le flux de sortie Fs dans lequel sont mélangés la poudre de polissage et le fluide.

Comme indiqué ci-dessus, la languette 22 entraîne la dispersion du flux sortant Fs formé par la réunion des flux Ff et Fa/p en amont de la languette 22 dans l'espace 23. Cette dispersion est avantageuse en ce que le champ de dispersion est très large et permet de couvrir de façon optimale la zone à traiter. Les flux Ff et Fa/p se rejoignent avant que l'effet de dispersion se réalise de sorte que la projection du mélange de poudre et de fluide est réalisée de manière homogène dans de multiples directions.

Dans le mode de réalisation particulier considéré ici, le premier canal 14 et le deuxième canal 16 débouchent tous deux en sortie directement sur l'extérieur de la buse 4, au voisinage de sa partie distale 10. Le mélange de la poudre de polissage et du fluide sortant des orifices de sortie 18 et 20 se fait donc ici à l'extérieur de la buse 4.

La buse selon ce mode particulier de réalisation de l'invention est donc dépourvue de chambre (ou d'un quelconque espace interne à la buse) qui serait destinée à recevoir la poudre et le fluide comme par exemple dans la buse du document FR2962323. Dans le mode de réalisation envisagé ici, le mélange du fluide avec la poudre se fait à l'extérieur de la buse, et plus particulièrement dans cet exemple, directement à la sortie des orifices dans l'espace extérieur séparant lesdits orifices de la languette. On s'affranchit ainsi de tous potentiels risques de colmatage comme précédemment expliqué.

On peut toutefois envisager des variantes de réalisation selon lesquelles le mélange du fluide et de la poudre de polissage est réalisé dans une zone interne à la buse (e.g. au voisinage de la partie distale 10 de la buse 4) de sorte que le flux sortant soit déjà un mélange de fluide et de poudre de polissage.

De plus, étant donné son positionnement à l'extrémité libre 12 de la partie distale 10, la languette présente un avantage en ce qu'elle facilite en outre l'insertion par le praticien de l'extrémité de la buse dans la zone à traiter. La languette de l'invention facilite par exemple l'introduction de la buse dans une poche parodontale.

La géométrie de la languette, et en particulier celle du bord distal 26 de la languette 22 opposé au bord proximal 24, peut être configurée de façon à faciliter encore davantage l'accès à une zone à traiter telle qu'une poche parodontale. La languette peut par exemple présenter une forme effilée.

La languette 22 présente ici une épaisseur Dm3 faible par rapport à ces autres dimensions. Dans l'exemple considéré ici, l'épaisseur Dm3 est comprise entre Dm3min = 0.1mm et Dm3max = 0.35mm (**figure 5**). Toujours dans cet exemple, Dm1 = 2.15mm, Dm2 = 1.35mm et Dm4 = 3mm (**figure 7**). D'autres valeurs des dimensions ci-dessus sont toutefois envisageables.

Par ailleurs, la forme et les dimensions de la languette 22 peuvent être adaptées par l'homme du métier selon les besoins.

Dans cet exemple, la languette 22 est formée en un matériau métallique (ou un alliage de métaux), d'autres matériaux pouvant le cas échéant être utilisés selon les besoins. La languette 22 peut être rigide ou éventuellement présenter un certain degré de souplesse en fonction des besoins du praticien.

La perturbation, ou dispersion, du flux Fs est causée par la rencontre du flux de sortie Fs avec la languette 22, et plus particulièrement avec le bord proximal 24 dans l'exemple décrit ici. Ce bord proximal 24 forme ici une arrête dont le profil en vue de coupe peut être adapté selon la manière dont on souhaite disperser le flux Fs en sortie de buse.

Dans ce cas particulier, la languette 22 et les orifices de sortie sont configurés de sorte que le flux sortant Fs comprenant la poudre et le fluide se disperse de part et d'autre de la languette 22. La collision du flux Fs contre le bord proximal 24 engendre la formation de flux dispersés Fda, Fdb du côté respectivement des faces supérieure et inférieure 22a, 22b de languette 22.

Selon la configuration de la languette 22 et des orifices de sortie, il est possible de privilégier la dispersion soit de Fda, soit de Fdb, afin de projeter en priorité le mélange poudre/fluide dans une direction particulière.

Dans une variante de réalisation, la buse (et plus particulièrement la languette et les orifices) est configurée de sorte que le flux sortant Fs entre essentiellement en collision sur l'une des faces de la languette 22, cette face entraînant la dispersion du flux.

Dans le mode de réalisation considéré ici, les orifices de sortie de la buse selon l'invention sont configurés de sorte à faire converger le fluide sortant vers le flux de poudre. De façon préférée, cette convergence est telle que le flux sortant Fs formé par la réunion du fluide et de la poudre de polissage soit orienté vers le bord proximal (située en vis-à-vis) de la languette.

Ainsi, dans le mode de réalisation des **figures 1 à 8**, les orifices 20a et 20b sont orientés de façon à faire converger les flux respectifs Ffa et Ffb vers le flux Fa/p sortant de l'orifice 18. Cette convergence permet de réunir les trois flux Ffa, Ffb et Fa/p de sorte à former le flux de sortie Fs avant que celui-ci ne rencontre la languette 22, et plus particulièrement le bord proximal 24 dans le cas présent.

Dans le cas particulier considéré ici, l'extrémité libre 12 de la partie distale 10 comprend deux orifices 20 pour délivrer le flux Ff de fluide. La disposition des orifices 20a et 20b de part et d'autre de l'orifice 18 permet de canaliser avantageusement le flux Fa/p de mélange air/poudre afin de concentrer le flux sortant Fs vers la languette 22, et plus particulièrement vers le bord proximal 24 de la languette 22 dans le cas présent, améliorant ainsi encore la dispersion du flux Fs.

Alternativement, il est toutefois possible de faire converger le flux Fs vers l'une des faces de la languette 22.

L'effet de canalisation du flux Fa/p est encore amélioré lorsque les orifices 20 délivrant le fluide sont des fentes comme c'est le cas dans l'exemple considéré ici.

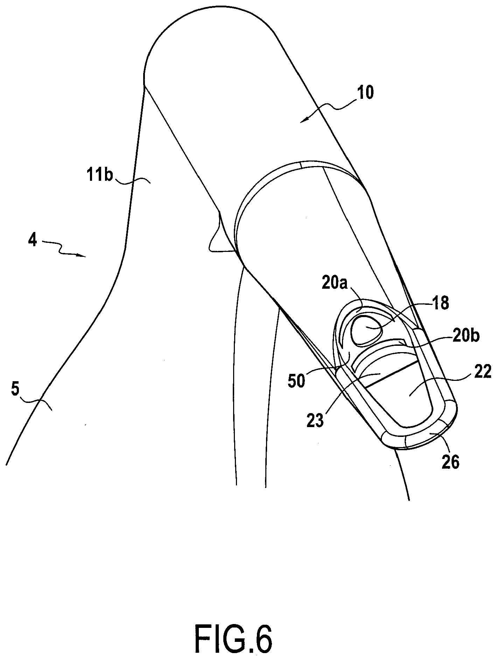

Plus précisément, comme représenté par exemple en **figure 6**, l'extrémité libre 12 de la partie distale 10 comprend une surface 50 sur laquelle débouchent les orifices 18, 20a et 20b, cette surface 50 faisant face au bord proximal 24 de la languette 22. La surface 50 forme avec les bras 40 et le bord proximal 24 les contours de l'ouverture 23.

Les orifices 20a et 20b sont en forme de fentes disposées parallèlement l'une de l'autre de part et d'autre de l'orifice central 18, ce dernier présentant une forme sensiblement circulaire. Dans cet exemple, les fentes 20a et 20b s'étendent au-delà de l'orifice 18 sur la surface 50 (les fentes étant plus longues que le diamètre de l'orifice central 18). Cette configuration particulière permet d'envelopper le flux Fa/p avec les flux Ffa et Ffb situés de part et d'autre et ainsi de faire converger un flux sortant Fs vers la languette 22 pour une dispersion optimale.

De manière préférée, la surface 50 est incurvée de façon concave afin d'accroître l'effet d'enveloppement mentionné ci-dessus et ainsi optimiser encore d'avantage l'effet de canalisation des flux Ff sur le flux Fa/p, comme c'est le cas dans l'exemple considéré.

Les débits des flux Ffa, Ffb et Fa/p sont par exemple configurés de la manière suivante, bien que d'autres configurations soient envisageables selon les besoins et la géométrie de la buse :
- débit Ffa = débit Ffb = 15ml/min (pour millilitres/minute), et en tout état de cause ≥ 10ml/min ;
- le débit Fa/p est tel que le débit d'air est supérieur ou égal à 3l/min (pour litres/minute) et la consommation de poudre est supérieure à 2g/min (pour grammes/minutes).

La forme circulaire de l'orifice 18 permet par ailleurs avantageusement d'obtenir un flux sortant Fs particulièrement homogène avant sa dispersion par la languette.

Dans l'exemple considéré, la languette 22 est plane, bien qu'un profil autre (e.g. plus ou moins incurvé) soit possible dans le cadre de l'invention.

La forme, le nombre, les dimensions et l'arrangement des orifices délivrant les flux concernés peuvent être adaptés par l'homme du métier selon ses besoins.

Dans le mode de réalisation décrit ici, le flux sortant Fs est parallèle (ou sensiblement parallèle) à l'axe longitudinale A1 de la parte distale 10 de la buse.

Dans un mode de réalisation particulier, l'angle prédéterminé α défini par les plans P2 et P3 est compris entre 13° et 17°, et s'élève de préférence à 15°. L'existence de cet angle α permet d'améliorer l'ergonomie de la buse dans certaines applications. L'accès parfois difficile du praticien aux molaires d'un patient est par exemple facilité par l'inclinaison α de la languette 22 autour de l'axe longitudinal A1.

Toutefois, on comprendra qu'il n'est pas obligatoire d'incliner la languette 22 autour de l'axe longitudinal A1 vis-à-vis du plan axial horizontal P3 de la partie distale 10. Dans un cas particulier, la languette 22 s'étend dans le plan P3 lui-même (autrement dit, le plan P2 se trouve confondu avec le plan axial horizontal A3 de la partie distale 10 de sorte que α = 0).

A noter également que l'angle entre l'axe longitudinal A1 de la partie distale 10 et l'axe longitudinal A2 de la partie proximale 8 peut être adapté selon les besoins, afin notamment d'optimiser l'ergonomie de la buse en fonction des praticiens et de l'utilisation considérés.

Par ailleurs, comme mentionné précédemment, la buse 4 comprend ici un mécanisme de fixation 40 situé au voisinage de l'extrémité libre 12 de la partie distale 10 et permettant la fixation de la languette 22 en position de travail sur le reste de la buse. Dans un mode particulier, ce mécanisme de fixation 40 autorise sélectivement le détachement de la languette 22 en vue de son remplacement éventuel. Il est ainsi possible pour un praticien de changer la languette si celle-ci présente une usure accrue ou afin d'opter pour une languette différente (géométrie, matériaux...) plus adaptée à une besoin particulier.

En résumé, la languette selon l'invention permet une dispersion efficace du flux sortant de la buse, ce flux résultant de la réunion d'au moins un flux de poudre de polissage et d'un flux de fluide. La buse de l'invention permet en outre de s'affranchir des risques de colmatage inhérents à certaines buses de l'art antérieur.

La languette peut en outre être avantageusement utilisée pour faciliter l'insertion de la buse dans une zone de traitement telle qu'une zone dentaire d'un patient (e.g. poches parodontales).

On comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Buse (4) pour polisseur destinée aux traitements dentaires, comprenant un corps (5) s'étendant entre une partie proximale (8) destinée à être raccordée à une pièce à main (6) et une partie distale (10), le corps comprenant un premier canal (14) destiné à délivrer une poudre de polissage dentaire (Fa/p) et un deuxième canal (16) destiné à délivrer un fluide (Ff),
les deux canaux débouchant chacun sur au moins un orifice (18, 20) respectif débouchant au voisinage de l'extrémité libre (12) de la partie distale (10),
**caractérisé en ce qu'**au moins une portion de l'extrémité libre (12) de la partie distale (10) forme une languette (22) s'étendant dans le prolongement de ladite partie distale (10) en aval desdits orifices (18, 20), la languette (22) étant disposée à distance desdits orifices de façon à perturber au moins en partie le flux (Fs) formé par la réunion de la poudre de polissage dentaire et du fluide sortant desdits orifices.

2. Buse selon la revendication 1, dans laquelle la languette est sensiblement parallèle au flux sortant.

3. Buse selon la revendication 1 ou 2, dans laquelle la languette s'étend dans un plan axial (P2) de la partie distale (10).

4. Buse selon la revendication 3, le plan (P2) dans lequel s'étend la languette (22) forme un angle (α) sensiblement égal à 15° avec le plan axial horizontal (P3) de la partie distale (10).

5. Buse selon l'une quelconque des revendications 1 à 4, dans laquelle lesdits orifices (18, 20) sont orientés de façon à diriger au moins en partie le flux (Fs) sortant vers un bord (24) de la languette.

6. Buse selon l'une quelconque des revendications 1 à 5, dans laquelle ladite languette (22) est configurée de sorte que ledit flux (Fs) sortant se disperse de part et d'autre de ladite languette.

7. Buse selon l'une quelconque des revendications 1 à 6, dans laquelle le premier canal (14) débouche sur un premier orifice central (18) et le deuxième canal (16) débouche sur deux deuxièmes orifices (20a, 20b) situés de part et d'autre dudit premier orifice (18).

8. Buse selon la revendication 7, dans laquelle les deuxièmes orifices (20a, 20b) sont configurés pour faire converger le fluide (Ff) sortant vers la poudre de polissage (Fa/p) sortant dudit premier orifice (18).

9. Buse selon l'une quelconque des revendications 1 à 8, dans laquelle chaque orifice (18, 20) du premier et du deuxième canal (14, 16) débouche sur l'extérieur de la buse (4) au voisinage de l'extrémité libre (12) de ladite partie distale (10) de la buse de sorte que ladite réunion de la poudre de polissage dentaire et du fluide sortant desdits orifices soit réalisée à l'extérieur de ladite buse (4).

10. Buse selon l'une quelconque des revendications 1 à 8, la languette (22) présentant une forme effilée pour faciliter l'introduction de ladite buse (4) dans une zone à traiter.

11. Buse selon l'une quelconque des revendication 1 à 10, comprenant en outre au voisinage de l'extrémité libre (12) de la partie distale (10) un mécanisme de fixation (40a, 40b) configuré pour fixer en position de travail la languette (22), ledit mécanisme de fixation autorisant le détachement de ladite languette en vue de son remplacement éventuel.

12. Buse selon l'une quelconque des revendications 1 à 11, dans laquelle ledit flux (Fs) est sensiblement parallèle à l'axe longitudinal (A1) de la partie distale (10) de la buse.

13. Buse selon l'une quelconque des revendications 1 à 12, dans laquelle ledit fluide est un liquide.

14. Polisseur comprenant une pièce à main (6) comportant un premier canal d'alimentation en poudre de polissage et un deuxième canal d'alimentation en fluide, **caractérisé en ce qu'**il comprend en outre une buse (4) selon l'une quelconque des revendications 1 à 13, la partie proximale (8) de la buse étant connectée à la pièce à main (6), ledit premier canal d'alimentation coopérant avec le premier canal (14) de la buse et ledit deuxième canal d'alimentation coopérant avec le deuxième canal (16) de la buse.

## Patentansprüche

1. Düse (4) für einen Polierer, die für zahnärztliche Behandlungen bestimmt ist, umfassend einen Körper (5), der sich zwischen einem proximalen Teil (8), der dazu bestimmt ist, mit einem Handstück (6) verbunden zu werden, und einem distalen Teil (10) erstreckt, wobei der Körper einen ersten Kanal (14), der dazu bestimmt ist, ein Zahnpolierpulver (Fa/p) abzugeben, und einen zweiten Kanal (16) aufweist, der dazu bestimmt ist, ein Fluid (Ff) abzugeben,
wobei die zwei Kanäle jeweils an mindestens einer jeweiligen Öffnung (18, 20) münden, die in der Nähe des freien Endes (12) des distalen Teils (10) mündet,
**dadurch gekennzeichnet, dass** mindestens ein Abschnitt des freien Endes (12) des distalen Teils (10) eine Zunge (22) bildet, die sich in der Verlängerung des distalen Teils (10) nachgelagert nach den Öffnungen (18, 20) erstreckt, wobei die Zunge (22) beabstandet von den Öffnungen derart angeordnet ist, um mindestens teilweise den Strom (Fs) zu unterbrechen, der durch das Vereinen des Zahnpolierpulvers und des Fluids, das aus den Öffnungen austritt, gebildet ist.

2. Düse nach Anspruch 1, wobei die Zunge im Wesentlichen parallel zu dem austretenden Strom ist.

3. Düse nach Anspruch 1 oder 2, wobei sich die Zunge in einer axialen Ebene (P2) des distalen Teils (10) erstreckt.

4. Düse nach Anspruch 3, wobei die Ebene (P2), in der sich die Zunge (22) erstreckt, einen Winkel (α), der im Wesentlichen gleich 15 ° beträgt, mit der horizontalen Ebene (P3) des distalen Teils (10) bildet.

5. Düse nach einem der Ansprüche 1 bis 4, wobei die Öffnungen (18, 20) derart ausgerichtet sind, um mindestens teilweise den austretenden Strom (Fs) in Richtung eines Randes (24) der Zunge zu leiten.

6. Düse nach einem der Ansprüche 1 bis 5, wobei die Zunge (22) derart konfiguriert ist, dass sich der austretende Strom (Fs) auf beiden Seiten der Zunge ausbreitet.

7. Düse nach einem der Ansprüche 1 bis 6, wobei der erste Kanal (14) in einer ersten zentralen Öffnung (18) mündet und der zweite Kanal (16) in zwei zweiten Öffnungen (20a, 20b) mündet, die auf beiden Seiten der ersten Öffnung (18) angeordnet sind.

8. Düse nach Anspruch 7, wobei die zweiten Öffnungen (20a, 20b) konfiguriert sind, um das austretende Fluid (Ff) in Richtung des Polierpulvers (Fa/p) konvergieren zu lassen, das aus der ersten Öffnung (18) austritt.

9. Düse nach einem der Ansprüche 1 bis 8, wobei jede Öffnung (18, 20) des ersten und des zweiten Kanals (14, 16) an der Außenseite der Düse (4) in der Nähe des freien Endes (12) des distalen Teils (10) der Düse derart mündet, dass das Vereinen des Zahnpolierpulvers und des Fluids, das aus den Öffnungen austritt, außerhalb der Düse (4) durchgeführt wird.

10. Düse nach einem der Ansprüche 1 bis 8, wobei die Zunge (22) eine sich verjüngende Form aufweist, um das Einführen der Düse (4) in einen zu behandelnden Bereich zu erleichtern.

11. Düse nach einem der Ansprüche 1 bis 10, ferner umfassend in der Nähe des freien Endes (12) des distalen Teils (10) einen Befestigungsmechanismus (40a, 40b), der konfiguriert ist, um die Zunge (22) in der Arbeitsposition zu befestigen, wobei der Befestigungsmechanismus das Loslösen der Zunge für ihr eventuelles Austauschen ermöglicht.

12. Düse nach einem der Ansprüche 1 bis 11, wobei der Strom (Fs) im Wesentlichen parallel zu der Längsachse (A1) des distalen Teils (10) der Düse ist.

13. Düse nach einem der Ansprüche 1 bis 12, wobei das Fluid eine Flüssigkeit ist.

14. Polierer, umfassend ein Handstück (6), umfassend einen ersten Kanal zum Zuführen von Polierpulver und einen zweiten Kanal zum Zuführen von Fluid, **dadurch gekennzeichnet, dass** er ferner eine Düse (4) nach einem der Ansprüche 1 bis 13 aufweist, wobei der proximale Teil (8) der Düse mit dem Handstück (6) verbunden ist, wobei der erste Kanal zum Zuführen mit dem ersten Kanal (14) der Düse und der zweite Kanal zum Zuführen mit dem zweiten Kanal (16) der Düse zusammenwirkt.

## Claims

1. A polisher nozzle (4) for dental treatment, comprising a body (5) extending between a proximal portion (8) for connection to a handpiece (6) and a distal portion (10), the body having a first channel (14) for delivering a dental polishing powder (Fa/p) and a second channel (16) for delivering a fluid (Ff); and
each of the two channels opening out to at least one respective orifice (18, 20) opening out in the vicinity of the free end (12) of the distal portion (10);
the nozzle being **characterized in that** at least a portion of the free end (12) of the distal portion (10) forms a spatula (22) extending in line with said distal portion (10) downstream from said orifices (18, 20), the spatula (22) being arranged at a distance from said orifices in such a manner as to disturb at least in part the flow (Fs) formed by the combination of the dental polishing powder and the fluid leaving said orifices.

2. A nozzle according to claim 1, wherein the spatula is substantially parallel to the outgoing flow.

3. A nozzle according to claim 1 or 2, wherein the spatula extends in an axial plane (P2) of the distal portion (10).

4. A nozzle according to claim 3, the plane (P2) in which the spatula extends (22) forms an angle (α) with the horizontal axial plane (P3) that is substantially equal to 15° from the distal portion (10).

5. A nozzle according to any one of claims 1 to 4, wherein said orifices (18, 20) are oriented in such a manner as to direct the outgoing flow (Fs) at least in part towards an edge (24) of the spatula.

6. A nozzle according to any one of claims 1 to 5, wherein said spatula (22) is configured so that said outgoing flow (Fs) disperses on opposite sides of said spatula.

7. A nozzle according to any one of claims 1 to 6, wherein the first channel (14) opens out in a first central orifice (18) and the second channel (16) opens out in two second orifices (20a, 20b) located on opposite sides of said first orifice (18).

8. A nozzle according to claim 7, wherein the second orifices (20a, 20b) are configured to cause the outgoing fluid (Ff) to converge towards the polishing powder (Fa/p) leaving said first orifice (18).

9. A nozzle according to any one of claims 1 to 8, wherein each orifice (18, 20) of the first and second channels (14, 16) opens out to the outside of the nozzle (4) in the vicinity of the free end (12) of said distal portion (10) of the nozzle so that said combining of the dental polishing powder and of the outgoing fluid leaving said orifices takes place outside said nozzle (4).

10. A nozzle according to any one of claims 1 to 8, the spatula (22) presenting a tapered shape in order to make it easier to insert said nozzle (4) into a zone to be treated.

11. A nozzle according to any one of claims 1 to 10, further including a fastener mechanism in the vicinity of the free end (12) of the distal portion (10), which fastener mechanism (40a, 40b) is configured to fasten the spatula (22) in the working position, said fastener mechanism allowing said spatula to be detached for its potential replacement.

12. A nozzle according to any one of claims 1 to 11, wherein said flow (Fs) is substantially parallel to the longitudinal axis (A1) of the distal portion (10) of the nozzle.

13. A nozzle according to any one of claims 1 to 12, wherein said fluid is a liquid.

14. A polisher comprising a handpiece (6) including a first channel for feeding polishing powder and a second channel for feeding fluid, the polisher being **characterized in that** it further includes a nozzle (4) according to any one of claims 1 to 13, the proximal portion (8) of the nozzle being connected to the handpiece (6), said first channel for feeding polishing powder co-operating with the first channel (14) in the nozzle, and said second channel for feeding fluid co-operating with the second channel (16) in the nozzle.
